Europäisches Patentamt

**European Patent Office**

Office européen des brevets

(11) Publication number: **0 103 039**
**B1**

# EUROPEAN PATENT SPECIFICATION

(45) Date of publication of patent specification: **18.06.86**

(51) Int. Cl.⁴: **D 04 H 13/00, A 41 D 19/00**

(21) Application number: **82108436.5**

(22) Date of filing: **13.09.82**

(54) **Wearing apparel and methods for the manufacture of wearing apparel.**

(43) Date of publication of application:
**21.03.84 Bulletin 84/12**

(45) Publication of the grant of the patent:
**18.06.86 Bulletin 86/25**

(84) Designated Contracting States:
**BE DE FR GB IT**

(56) References cited:
**US-A-4 089 069**
**US-A-4 151 662**
**US-A-4 172 293**
**US-A-4 174 542**

(73) Proprietor: **Becton, Dickinson and Company**
**Mack Centre Drive**
**Paramus New Jersey 07652 (US)**

(72) Inventor: **Andrews, Richard C.**
**25159 SR 83**
**Coshocto Ohio (US)**

(74) Representative: **von Kreisler, Alek, Dipl.-Chem.
et al**
**Deichmannhaus am Hauptbahnhof**
**D-5000 Köln 1 (DE)**

Courier Press, Leamington Spa, England.

## Description

Background and Statement of the Invention

This invention relates to methods for producing a laminate useful in the manufacture of wearing apparel, and particularly wearing apparel for use in a work environment such as work gloves, boots, sleeve guards and work aprons. The laminate includes a textured surface which is useful as a gripping surface for the work environment, and the method of the invention is such that the gripping surface may be controlled to be a liquid impervious or a breathable surface, as required. The invention includes joining a non-woven fibrous web, such as needled felt, to a knitted fabric web, such as knitted jersey. The non-woven fibrous web provides a surface which is soft and comfortable as an internal surface for the wearing apparel. The non-woven web also is useful in that it provides a cutting barrier for such material, as well as a "hot" and "cold" barrier. The two webs are joined together, utilizing a needled staple fiber, and preferably the fiber from the non-woven web itself, with the joining procedure being such that the fiber extends from the exposed surface of the knitted jersey to form a textured base surface for the reception of a subsequent coating. The coating is formed, preferably, from a synthetic polymer which may be knife applied or dip coated, depending upon the kind of surface required in the ultimate garment being produced. If the material is dip coated, all of the interstices of the exposed knitted surface web will be filled to provide a liquid impervious barrier for use in environments where it is important to have a "waterproof" surface. Alternatively, the coating may be knife applied or printed in order to leave uncoated interstices in the surface, to give a breathing function to the ultimate apparel being constructed.

There are many prior art arrangements for providing elastomer coated garments, such as work gloves. In this connection, reference is made to U.S. Patents 3,173,150; 4,089,069; 4,151,662, and 4,174,542. It is particularly desirable to have a wrinkle-finish type work glove, for example, for handling smooth articles, such as sheets of glass and metal sheets as discussed above. Wrinkle-finish gloves generally provide a much higher resistance to abrasion and cutting by the sharp edges and also provide, as will be understood, more efficient gripping than a smooth coated glove.

One approach to obtaining textured or "wrinkle finish" gloves involves dipping a jersey knit fabric glove into an elastomer coating. Before curing completely the elastomer coating, the coated glove is dipped into a solvent which causes the elastomer to swell. The swelling has the effect of causing an uneven surface to form which is the wrinkle finish. One disadvantage of such an approach is the use of hazardous solvents, and the commercial problems involved in producing such gloves, wherein certain handling procedures are required for solvent fumes. Moreover, the exposure of the elastomeric coating to a solvent weakens the coating and reduces the life of the garment produced by the material so formed.

The latter three patents mentioned above of Maris Vistins teach a laminate for use in making garments, and particularly protective garments such as work gloves, wherein the use of solvents is avoided. The Vistins teachings produce a textured surface on a protective garment utilizing a non-woven web. The non-woven web serves as the exterior surface of the protective garment and is the surface covered in the various subsequent coating techniques, whether in dipping or in the application of a knife procedure for coating the web. Further in the case of the Vistins procedures, the knitted jersey is utilized as the internal surface of the garment while the non-woven fibrous web is used as the external surface. The non-woven fibrous web, because of its "fuzzy" exterior surface, provides an uneven surface for receiving an elastomer coating which is textured to provide the desired gripping action of a subsequent garment made from the laminate so produced.

However, certain disadvantages are involved in the use of laminate in accordance with the Vistins teachings. That is, the use of the non-woven fibrous web as the external surface which is subsequently coated causes certain problems during the production of the glove liner which is subsequently coated. That is, the fibrous web is easily disturbed and pulled apart in its exposed state during the production of the glove liner, and the subsequent loading of the liner onto the equipment used for the application of the elastomeric coating. Moreover, there is not sufficient control of the non-woven fibrous web exposed surface so as to control the degree of texture desired in the resulting wearing apparel made from the laminate.

Detailed Description of the Invention

With this invention, by contrast, a laminate is provided for the subsequent production of wearing apparel, such as work gloves, work boots and aprons which reverses the two webs provided in the Vistins teachings. That is, the non-woven fibrous web, such as needled felt, is joined to a woven or knitted web, such as knitted jersey with the ultimate exposed surface of the knitted jersey being utilized as the *external* surface of the resulting garment, while the non-wovenn fibrous web is used as the interior surface of the resulting garment. The two webs are joined together in a laminate by a needling procedure wherein a staple needled fiber is utilized from the non-woven web which fiber extends from the exposed surface of the knitted jersey to provide the ultimate texture for the material which is formed into a garment.

Because of this, the number, and extent of penetration, and the denier of the fiber during the needling procedure controls the resulting surface texture of a garment being produced. That is, the depth of penetration, the density of penetration and the fiber denier all are variables which can be used to control the ultimate characteristics of the surface of a garment being produced. Moreover, by utilizing the non-woven fibrous web in its unaltered state, a soft comfortable interior surface is provided for the ultimately formed wearing apparel as it is worn. In addition, it need not be napped as is the case with the prior art laminate produced for such work gloves.

With the degree of needling of the non-woven web to the knitted material such as knitted jersey, the non-woven web becomes an integral part of the fabric construction and the body thereof holds in place more firmly for the subsequent handling operations. The non-woven web maintains its "pad" characteristics, which provide an insulator property to the ultimate garments, as well as protection from sharp objects.

In considering generally the conditions for carrying out the method of the invention here for producing the laminate of the invention here, one may note that it is preferable to use the synthetic fiber from the non-woven fiber web as the staple fiber for joining the two webs together. The selection of the synthetic fiber for use in the joining procedure provides a wide latitude in the ultimate properties of the laminate for the texture of the coating, as required and desired in the ultimate apparel being produced, and the properties of that apparel. Representative staple fibers which may be used if selected separately from the non-woven web are polyesters, polyamides, such as Nylon, and polyolefins, such as polypropylene or polyethylene. Rayon may be used if a "wet dog" appearance is desired. The hydrophilic properties of rayon give this wet dog appearance. The rayon behaves like a cotton fiber in that the ultimate elastomer coating tends to coagulate by the mechanism of rapid dehydration.

With respect to the fibrous non-woven web, it may be produced on conventional carding or garnett machines. Representative materials which may be used are wool, polyester, polyamides, such as Kevlar or Nomex which are products of DuPont, polyolefins, such as polypropylene and polyethylene, and copolymers of acrylic acid, such as polyacrylonitrile. Polyester is preferred. The other web, which may be knitted or woven, may be cotton, polyester or a cotton-polyester blend, for example, if knitted, or Kevlar, Nylon or cotton, if woven, or cotton, or a cotton-polyester blend if a flannel.

As discussed above, the depth of penetration, the density of penetration, and the fiber denier are the variables by which a wide selection of surface texture characteristics may be obtained. The ability of the coated surface to allow moisture transmission, or to form an impermeable surface is more dependent upon the method of coating application. It has been found that a very light knife or printed coating gives protection to the fibers, while all of the interstices are not filled with the polymer coating. This has the effect of giving the final garment or wearing apparel a breathing characteristic. On the other hand, in order to obtain a coating that will resist the penetration of liquids, the coating must be continuous. To achieve this kind of property, a dipped coating is utilized.

In considering further the general conditions for carrying out the method, the two webs may be joined in a conventional needle punching machine, such as a Hunter Fiber-Locker (TM) machine. The depth of penetration will be such so as to cause the fiber to extend from the exposed surface of the woven or knitted web, as discussed above, and preferably within the range of between about 0.64 and 1.27 cm (0.25 and 0.50 inches). The density of penetration will be within the range of between about 62.0 and 108.5 penetrations per $cm^2$ (400 and 700 penetrations per square inch). The denier of the fiber will be selected to give the desired degree of texture to the surface as discussed above, and will vary within the range of between about 1.5 and 15.

Thus, with the method of the invention here, it is possible to produce fabric construction that will conform to complex shapes, as desired, by the use of knitted substrates. It is also possible to engineer into the fabric construction heat resistance or resistance to cutting and puncture, as required, such as by the application of polyamide fibers in the non-woven web or the knit substrate, thus offering enhanced protection to the wearer of the garment.

It will be appreciated that with the method of the invention here the laminates produced may be utilized in various configurations for wearing apparel. For example, a laminate may be utilized to provide a wrinkle surface to the palm of the glove while only a knitted jersey layer is utilized for the backside surface of the glove. Otherwise, the entire glove may be made to provide or to have a textured gripping and/or protective surface. By the same token, certain areas of a pair of work boots will require a gripping surface, such as the soles thereof, while it may be desirable to have the liners for forming the uppers formulated only of a knitted jersey. Moreover, certain areas of work gloves, for example, may not be coated, such as the cuffs of such gloves, while other areas may have a smooth coating, as required for flexibility, appearance and/ or comfort.

### Description of the Drawings

Fig. 1 is a prospective view of a glove liner illustrating one embodiment of wearing apparel produced from the laminate of the invention, wherein the palm is constructed of the laminate of the invention, while the back is constructed of a conventional woven or knitted fabric;

Fig. 1a is a prospective view of a further embodiment of glove liner of the invention and produced in accordance with the method of the invention here to be subsequently coated wherein both the palm and the back portions of the liner are constructed in accordance with the method of the invention here;

Fig. 2 is a sectional view of a laminate produced in accordance with the method of the invention here;

Fig. 3 is a prospective view of a coated glove produced in accordance with the method of the invention; and

Fig. 4 is a sectional view of the laminate of the invention, produced in accordance with the method of the invention, and similar to that of Fig. 2, but with the coating applied.

Detailed Description of the Invention

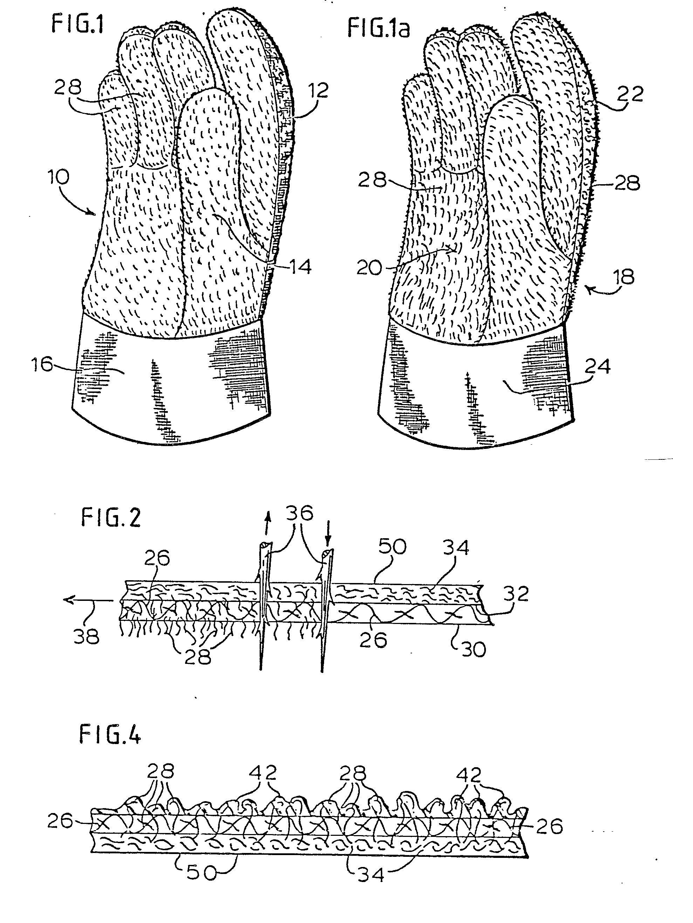

Referring to the drawings in which like reference characters refer to like parts throughout the several views thereof, in Fig. 1, a glove liner 10 is shown having an upper portion or backside 12 and a palm portion 14, with a cuff 16. Palm portion 14 is prepared as a laminate according to the invention here, whereas the backside 12 is comprised of a woven or knitted fabric web.

By contrast, the glove liner 18 shown in Fig. 1a has a palm portion 20 which is the same as the backside 22, with both portions prepared from a laminate produced in accordance herewith. Glove liner 18 has a cuff 24 similar to the cuff 16 of glove 10 in Fig. 1.

Fig. 2 shows a sectional view of a laminate utilized and formed in accordance with the method here for making the palm portion 14 of the glove 10 shown in Fig. 1 and both the backside and palm portion of the glove 18 shown in Fig. 1a. That is, the laminate is comprised of a non-woven fibrous web 34, which may be a needled cotton felt, for example. Web 34 is joined to a web 26, which may be a knitted cotton jersey, for example. The two webs are jointed together by a needling action, in the direction of arrow 38, by needles 36 using the synthetic staple fiber from web 34. The procedure is such that the staple fiber extends from the surface 30 of the web 26, as shown at 28 in Fig. 2. The extended fibers 28 serve, ultimately, as the outer surface of the palm portion 14 of the glove liner of Fig. 1, for example. The fibers 28 extending from surface 30 may have varying degrees of denier, as discussed above, and as selected during the processing procedures for forming the webs 34 and 26 together. The heavier the denier the higher degree of texture that will be secured in the ultimate garment produced by the laminate, in accordance herewith. The exposed surface 50 of the non-woven fibrous web, because of the density of penetration of the needles 36 has the appearance of becoming a part of the web 26 and serves as a warm soft interior surface for the subsequent wearing apparel produced, such as the internal surface of a glove.

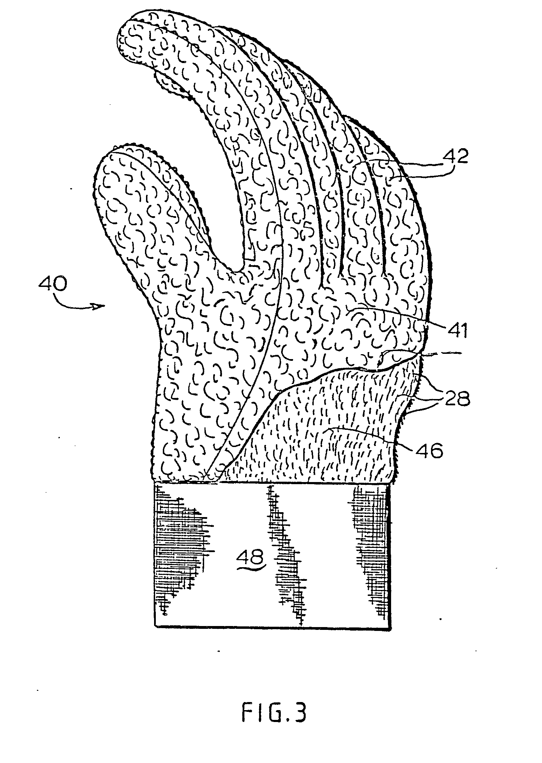

Referring to Fig. 3, a glove 40 is shown with the backside surface 41 thereof having an elastomeric coating 42, and with a portion 46 left uncoated with the coating line being designated by 44. The extended stable fibers 28 serve to provide a base for the subsequent texture of the elastomeric coating 42 as shown in Fig. 4. It will be apparent that the density of penetration, the depth of penetration and fiber denier will have an effect upon the subsequent texture of the surface 42, as can be seen in Fig. 4.

With respect to the elastomeric coating used for coating the wearing apparel produced in accordance with this invention, such a coating may be a fused polyvinyl chloride plastisol, a rubber latex, or like elastomeric coating. Representative elastomeric compositions are as follows.

Composition 1

| Material | Parts By Weight |
| --- | --- |
| PVC Resin | 100 |
| Plasticizer | 70—120 |
| Stabilizer | 2—4 |
| Pigments | 3.5 |

As purely illustrative of a natural rubber dip formulation useful in accordance with this invention, one may note the following composition 2:

Composition 2

| Material | Parts By Weight |
| --- | --- |
| Natural Rubber Latex | 100 |
| Sulfur | 1.0 |
| Zinc Oxide | 3.0 |
| Antioxidant | 1.50 |
| Accelerator | 1.50 |
| Pigment, Stabilizer, Thickener | 5.0 |

As illustrative of a synthetic rubber dip formulation, one may note the following composition 3:

Composition 3

| Material | Parts By Weight |
| --- | --- |
| Neoprene Latex | 100 |
| Sulfur | 0.65 |
| Zinc Oxide | 3.0 |
| Antioxidant | 1.3 |
| Accelerator | 3.0 |
| Pigment, Thickeners, and Fillers | 5.0 |

As further illustrative of the method of the invention here, one may note the following examples in which wearing apparel is prepared. It is to be understood, however, that these examples are being presented with the understanding that they are to have no limiting character on the broad disclosure of the invention, as generally set forth herein, and as directed to men skilled in the art.

### Example 1

A fabric glove is produced having a surface texture similar to a suede leather with a superior wet and dry grip and with excellent resistance to penetration, cutting and abrasion. It is desirable that these aforementioned properties be characteristic of a glove produced from the laminate, in accordance with this procedure, but also that the glove have releasing moisture characteristics entrapped inside from perspiration. First, a suitable fibrous non-woven web of a staple polyester was selected. Subsequently, in a second selection, a knit fabric polyester was selected. The two webs were joined together by a conventional needling technique, utilizing the staple polyester material from the fibrous non-woven web, which resists matting down, and has a denier of 6. By continuous needling the non-woven web and the nit fabric, using a density of penetration of 108.5 penetrations per cm² (700 penetrations per square inch) and a depth of penetration of 1.27 cm (one-half inch), the two webs were joined together. Subsequently, after the knitting procedure, the constructed fabric laminate was knife coated using as the elastomeric compound Composition 3, as noted above. The formed fabric, once formulated as above, was cut into pieces for the manufacture of gloves using conventional techniques and the ultimate glove formulated had the desired properties noted above.

It will be appreciated that the degree of texture on the surface of the ultimate glove produced, in accordance with Example 1, may be varied according to the denier of the staple fiber utilized in the non-woven web. Also, the number of penetrations per cm² and per square inch, respectively, and the depth of penetration may be varied for this purpose. Preferably, for producing a garment capable of releasing moisture, the denier will be within the range of between about 1.5 and 6 denier, the density of penetration will be within the range of between about 69.7—108.5 penetrations per cm² (450—700 penetrations per square inch), and the depth of penetration will be within the range of between about 0.64 and 1.27 cm (0.25 and 0.50 inches).

### Example 2

In this example, the wearing apparel desired and ultimately produced is a fabric glove having a textured surface, and a moisture barrier property. In this example, a fibrous non-woven web of a suitable staple was selected having a denier of 15. It was used to supply fibers for combining the non-woven web and a knit fabric web both of polyester, using a density of penetration of 62.0 penetrations per cm² (400 penetrations per square inch) and a depth of 1.27 cm (one-half inch), in the needling procedure. Subsequently, the fabric pieces for joining together to prepare the fabric glove are cut and joined in the usual conventional procedures with the subsequent glove liners so constructed coated by dipping in an elastomeric compound according to Composition 1 above. Again, in this example, as with Example 1, the texture of a desired ultimate moisture-proof surface may be varied by selecting a different denier which may be within the range of between about 6 and 15, by selecting a different degree of penetration which may be within the range of between about 31.0 and 62.0 penetrations per cm² (200 and 400 penetrations per square inch) and a depth penetration which may be within the range of between about 0.64 and 1.27 cm (0.25 and 0.50 inches).

While the above examples disclose procedures for making gloves as wearing apparel, it will be appreciated by those skilled in the art that the method of the invention here and the laminate so produced by the method may be utilized for any wearing apparel where a textured surface is desired with enhanced protective qualities and wherein the degree of texture from the method provides a wide latitude, both from the standpoint of gripping properties and, as will be appreciated, comfort and asthetic properties.

While the methods and products herein disclosed form preferred embodiments of the invention, this invention is not limited to those specific methods and products, and changes can be made therein without departing from the scope of the invention, which is defined in the appended claims. For example, as will be appreciated by practitioners in the art, various different elastomeric coatings may be utilized, selecting a wide variety of polymers, in order to have an ultimate final surface on the wearing apparel of varying properties which may include extremely soft pliable surfaces or hard impervious surfaces. Moreover, the formulations of those compositions may be varied in order to have a thicker or thinner coating, as required for comfort or protection, as will be appreciated.

### Claims

1. A laminate for use in wearing apparel, wherein a non-woven fibrous web (34) containing a staple fibre (28) and a woven or knitted web (26) are joined together by needling, characterized by the staple fibre (28) of said non-woven web (34) having a denier within the range of between about 1,5 and 15, the staple fibre of said non-woven web (34) being needled through said woven or knitted web (26) with a density of penetration within the range of between about 62,0 and 108,5 penetrations per cm² (400 and 700 penetrations per square inch), the staple fibre (28) of said non-woven web (34) extending from the exposed surface (30) of said woven or knitted web (26) to form a basis for a subsequently applied textured coating (42), the exposed surface (30) of said woven or knitted web (26) forming the outer surface of the wearing apparel, and the exposed surface (50) of said non-woven web (34) forming the internal surface of the wearing apparel.

2. The laminate of claim 1, further characterized by said non-woven fibrous web (34) is comprised of materials selected from the group consisting of wool, polyester, polyolefins, polyamides, polyacrylonitrile, and mixtures thereof.

3. The laminate of claim 1, further characterized by said woven or knitted web (26) is comprised of materials selected from the group consisting of cotton, polyester, polyamide and mixtures thereof.

4. The laminate of claim 1, further characterized by said staple fiber (28) of the non-woven web (34) is polyamide.

5. The laminate of claim 1, further characterized by

a) said fibrous non-woven web (34) is polyester, and

b) said woven or knitted web (26) is a knitted jersey of polyester.

6. The laminate of claim 1, further characterized by said laminate joined together by needling with said staple fiber (28) of the non-woven web (34) having a depth of penetration of within the range of between about 0,64 and 1,27 cm (0,25 and 0,50 inches).

7. A work glove liner, characterized in that the palm (14) of said work glove liner comprises a laminate according to one of the Claims 1—6 and that the backside (12) of said work glove liner comprises woven or knitted textile.

8. The work glove liner of claim 7, further characterized by an elastomeric coating (42) applied to the outer surface of the said palm (14) of the said glove liner.

9. The work glove liner of claim 8, further characterized by said elastomeric coating (42) is selected from the group consisting of polyvinyl chloride plastisol, natural rubber and synthetic rubber.

10. A work glove liner, characterized in that the palm (28) and the backside (22) comprises a laminate according to one of the Claims 1—6.

11. The work glove liner of claim 10, further characterized by an elastomeric coating (42) applied to the outer surface of the palm (20) and backside (22) of said glove liner.

12. The work glove liner of claim 11, further characterized by said elastomeric coating (42) is selected from the group consisting of polyvinyl chloride plastisol, natural rubber, and synthetic rubber.

13. A work boot liner, characterized in that at least a portion of said work boot liner comprises a laminate according to one of the Claims 1—6, that said laminate portion has an elastomeric coating (42) thereon, and that said elastomeric coating (42) is selected from the group consisting of polyvinyl chloride plastisol, natural rubber, and synthetic rubber.

14. A work apron liner, characterized in that at least a portion of said work apron liner comprises a laminate according to one of the Claims 1—6, that said laminate portion has an elastomeric coating (42) thereon, and that said elastomeric coating (42) is selected from the group consisting of polyvinyl plastisol, natural rubber, and synthetic rubber.

15. A work glove, characterized in that at least a portion of said work glove comprises a laminate according to Claims 1 and 6.

16. The glove of claim 15, further characterized by said elastomeric coating (42) selected from the group consisting of polyvinyl chloride plastisol, natural rubbers and synthetic rubbers.

17. The glove of claim 15, further characterized by said non-woven fibrous web (34) is comprised of materials selected from the group consisting of wool, polyester, polyolefins, polyamides, polyacrylonitrile and mixtures thereof.

18. The glove of claim 15, further characterized by said woven or knitted web (26) is comprised of materials selected from the group consisting of cotton, polyester, polyamide and mixtures thereof.

19. A method for producing a laminate useful in wearing apparel, comprising the steps of

a) selecting in a first selecting step a fibrous non-woven web (34) containing a staple fiber (28),

b) selecting in a second selecting step a woven or knitted web (26),

c) needling said fibrous non-woven web (34) to said woven or knitted web (26) with said staple fiber (28) from said non-woven web (34) characterized by

d) said needling step being carried out so that said staple synthetic fiber (28) of the non-woven web (34) extends from the exposed surface (30) of said woven or knitted web (26), and

e) said needling step being carried out by needling with a depth of penetration of within the rannge of between about 0,64 and 1,27 cm (0,25 and 0,50 inches).

20. The method of claim 19, further characterized by said first selecting step is from materials selected from the group consisting of wool, polyester, polyolefins, polyamides, polyacrylonitrile, and mixtures thereof.

21. The method of claim 20, further characterized by said second selecting step is from materials selected from the group consisting of cotton, polyester, polyamides, and mixtures thereof.

22. The method of claim 21, further characterized by said staple fiber (28) has a denier within the range of between about 1,5 and 15.

23. The method of claim 22, further characterized by said needling step is carried out with a degree of penetration of within the range of between about 62,0 and 108,5 penetrations per cm² (400 and 700 penetrations per square inch).

24. A method for forming an item of wearing apparel, characterized by the steps of

a) forming a laminate according to the method of one of the Claims 19—23,

b) forming an item of wearing apparel in which at least a portion thereof is comprised of said laminate formed in said needling step, and

c) applying an elastomeric coating (42) to at least the said exposed surface (30) of said woven or knitted web (26) forming the exterior surface of said laminate portion of said wearing apparel formed in said forming step, and

d) curing said elastomeric coating (42).

25. The method of claim 24, further characterized by said elastomeric coating (42) in said applying step is selected from the group consisting of polyvinyl chloride plastisol, natural rubber and synthetic rubber.

26. The method of claim 25, further characterized by said applying step being carried out by knife coating.

27. The method of claim 26, further characterized by said applying step being carried out by printing.

28. The method of claim 27, further characterized by said applying step being carried out by dipping.

**Patentansprüche**

1. Laminat zur Verwendung in Kleidungsstükken, worin eine Stapelfasern (28) enthaltende Faservlies-Bahn (34) undd eine gewebte oder gestrickte Bahn (26) durch Vernadeln miteinander verbunden sind, dadurch gekennzeichnet, daß die Stapelfaser (28) der Vlies-Bahn (34) einem Titer (Denier) im Bereich zwischen etwa 1,5 und 15 hat, die Stapelfasern der Vlies-Bahn (34) durch die gewebte oder gestrickte Bahn (26) hindurch mit einer Dichte der Durchdringungen innerhalb des Bereichs zwischen etwa 62,0 und 108,5 Durchdringungen/cm² (400 und 700 Durchdringungen pro square inch) vernadelt sind, die Stapelfasern (28) der Vlies-Bahn (34) sich von der freiliegenden Oberfläche (30) der gewebten oder gestrickten Bahn (26) her ausbreiten und dadurch die Basis für eine nachträglich aufgebrachte texturierte Beschichtung (42) bilden, die freiliegende Oberfläche (30) der gewebten oder gestrickten Bahn (26) die äußere Oberfläche des Kleidungsstückes bildet und die freiliegende Oberfläche (50) der Vliesbahn (34) die innere Oberfläche des Kleidungsstückes bildet.

2. Laminat nach Anspruch 1, weiterhin dadurch gekennzeichnet, daß die Faservlies-Bahn (34) aus Stoffen besteht, die aus der aus Wolle, Polyester, Polyolefinen, Polyamiden, Polyacrylnitril und deren Mischungen bestehenden Gruppe asugewählt sind.

3. Laminat nach Anspruch 1, weiterhin dadurch gekennzeichnet, daß die gewebte oder gestrickte Bahn (26) aus Stoffen besteht, die aus der aus Baumwolle, Polyester, Polyamid und deren Mischungen bestehenden Gruppe ausgewählt sind.

4. Laminat nach Anspruch 1, weiterhin dadurch gekennzeichnet, daß die Stapelfaster (28) der Vlies-Bahn (34) Polyamid ist.

5. Laminat nach Anspruch 1, weiterhin dadurch gekennzeichnet, daß

a) die Faservlies-Bahn (34) Polyester ist und

b) die gewebte oder gestrickte Bahn (26) gestrickter Jersey aus Polyester ist.

6. Laminat nach Anspruch 1, weiterhin dadurch gekennzeichnet, daß das durch Vernadeln verbundene Laminat mit der Stapelfaser (28) der Vlies-Bahn (34) eine Durchdringungstiefe in dem Bereich zwischen etwa 0,64 und 1,27 cm (0,25 und 0,5 inches) aufweist.

7. Auskleidung eines Arbeitshandschuhs, dadurch gekennzeichnet, daß die Handfläche (14) der Auskleidung des Arbeitshandschuhs ein Laminat nach einem der Ansprüche 1 bis 6 umfaßt und daß die Rückseite (12) der Auskleidung der Arbeitshandschuhs ein gewebtes oder gestricktes Textilmaterial umfaßt.

8. Auskleidung eines Arbeitshandschuhs nach Anspruch 7, weiterhin dadurch gekennzeichnet, daß eine elastomere Beschichtung (42) auf die äußere Oberfläche der Handfläche (14) der Auskleidung des Arbeitshandschuhs aufgebracht ist.

9. Auskleidung eines Arbeitshandschuhs nach Anspruch 8, weiterhin dadurch gekennzeichnet, daß die elastomere Beschichtung (42) aus der aus Polyvinylchlorid-Plastisol, Naturkauktrschuk und synthetischem Kautschuk bestehenden Gruppe ausgewählt ist.

10. Auskleidung eines Arbeitshandschuhs, dadurch gekennzeichnet, daß die Handfläche (20) und die Rückseite (22) der Auskleidung des Arbeitshandschuhs ein Laminat nach einem der Ansprüche 1 bis 6 umfassen.

11. Auskleidung eines Arbeitshandschuhs nach Anspruch 10, weiterhin dadurch gekennzeichnet, daß eine elastomere Beschichtung (42) auf die äußere Oberfläche der Handfläche (20) und die Rückseite (22) der Auskleidung des Arbeitshandschuhs aufgebracht ist.

12. Auskleidung eines Arbeitshandschuhs nach Anspruch 11, weiterhin dadurch gekennzeichnet, daß die elastomere Beschichtung (42) aus der aus Polyvinylchlorid-Plastisol, Naturkautschuk und synthetischem Kautschuk bestehenden Gruppe ausgewählt ist.

13. Auskleidung eines Arbeitsstiefels, dadurch gekennzeichnet, daß wenigstens ein Teil der Auskleidung des Arbeitsstiefels ein Laminat nach einem der Ansprüche 1 bis 6 umfaßt, jener Laminat-Teil eine darauf befindliche elastomere Beschichtung (42) aufweist und die elastomere Beschichtung (42) aus der aus Polyvinylchlorid-Plastisol, Naturkauktschuk und synthetischem Kautschuk bestehenden Gruppe ausgewählt ist.

14. Auskleidung einer Arbeitsschlürze, dadurch gekennzeichnet, daß wenigstens ein Teil der Auskleidung der Arbeitsschürze ein Laminat nach einem der Ansprüche 1 bis 6 umfaßt, jener Laminat-Teil eine darauf befindliche elastomere Beschichtung (42) aufweist und die elastomere Beschichtung (42) aus der aus Polyvinylchlorid-Plastisol, Naturkautschuk und synthetischem Kautschuk bestehenden Gruppe ausgewählt ist.

15. Arbeitshandschuh, dadurch gekennzeichnet, daß wenigstens ein Teil des Arbeitshandschuhs ein Laminat nach einem der Ansprüche 1 bis 6 umfaßt.

16. Handschuh nach Anspruch 15, weiterhin dadurch gekennzeichnet, daß die elastomere Beschichtung (42) aus der aus Polyvinylchlorid-Plastisol, Naturkautschuk und synthetischem Kautschuk bestehenden Gruppe ausgewählt ist.

17. Handschuh nach Anspruch 15, weiterhin dadurch gekennzeichnet, daß die Faservlies-Bahn (34) aus Stoffen besteht, die aus der aus Wolle, Polyester, Polyolefinen, Polyamiden, Polyacrylnitril und deren Mischungen bestehenden Gruppe ausgewählt sind.

18. Handschuh nach Anspruch 15, weiterhin dadurch gekennzeichnet, daß die gewebte oder gestrickte Bahn (26) aus Stoffen besteht, die aus der aus Baumwolle, Polyester, Polyamid und deren Mischungen bestehenden Gruppe ausgewählt sind.

19. Verfahren zur Herstellung eines für Kleidungsstücke brauchbaren Laminats, umfassend die Schritte des

a) Auswählens einer Stapelfasern (28) enthaltenden Faservliesbahn (34) in einem ersten Auswahlschritt,

b) Auswählens einer gewebten oder gestrickten Bahn (26) in einem zweiten Auswahlschritt,

c) Vernadelns der Faservliesbahn (34) mid der gewebten oder gestrickten Bahn (26) mit der Stapelfaster (28) der Vliesbahn (34), dadurch gekennzeichnet, daß

d) der Schritt des Vernadelns so durchgeführt wird, daß die synthetische Stapelfaser (28) der Vlies-bahn (34) sich von der freiliegenden Oberfläche (30) der gewebten oder gestrickten Bahn (26) her ausbreiten und

e) der Schritt des Vernadelns durch Vernadeln mit einer Durchdringungstiefe in dem Bereich zwischen etwa 0,64 und 1,27 cm (0,25 und 0,5 inches) durchgeführt wird.

20. Verfahren nach Anspruch 19, weiterhin dadurch gekennzeichnet, daß der erste Auswahlschritt aus Stoffen der aus Wolle, Polyester, Polyolefinen, Polyamiden, Polyacrylnitril und deren Mischungen bestehenden Gruppe vorgenommen wird.

21. Verfahren nach Anspruch 20, weiterhin dadurch gekennzeichnet, daß der zweite Auswahlschritt aus Stoffenn der aus Baumwolle, Polyester, Polyamidenn und deren Mischungen bestehenden Gruppe vorgenommen wird.

22. Verfahren nach Anspruch 21, weiterhin dadurch gekennzeichnet, daß die Stapelfaser (28) einen Titer (Denier) im Bereich zwischen etwa 1,5 und 15 hat.

23. Verfahren nach Anspruch 22, weiterhin dadurch gekennzeichnet, daß der Schritt des Vernadelns mit einem Durchdringungsgrad innerhalb des Bereichs zwischen etwa 62,0 und 108,5 Durchdringungen/cm² (400 und 700 Durchdringungen pro square inch) durchgeführt wird.

24. Verfahren zur Herstellung eines Kleidungsstücks, umfassend die Schritte des

a) Herstellens eines Laminats mittels des Verfahrens nach einem der Ansprüche 19 bis 23,

b) Herstellens eines Kleidungsstückes, in dem wenigstens ein Teil desselben aus dem in dem Schritt des Vernadelns hergestellten Laminat besteht,

c) Aufbringens einer elastomeren Beschichtung (42) auf wenigstens die freiliegende Oberfläche (30) der gewebten oder gestrickten Bahn (26) unter Bildung der äußeren Oberfläche des Laminat-Teils des in dem Schritt des Herstellens erhaltenen Kleidungsstückes und

d) Härtens der elastomeren Beschichtung (42).

25. Verfahren nach Anspruch 24, weiterhin dadurch gekennzeichnet, daß die elastomere Beschichtung (42) in dem Schritt Aufbringens aus der aus Polyvinylchlorid-Plastisol, Naturkautschuk und synthetischem Kautschuk bestehenden Gruppe ausgewählt ist.

26. Verfahren nach Anspruch 25, weiterhin dadurch gekennzeichnet, daß der Schritt des Aufbringens mittels Rakelauftrag durchgeführt wird.

27. Verfahren nach Anspruch 25, weiterhin dadurch gekennzeichnet, daß der Schritt des Aufbringens mittels Drucken durchgeführt wird.

28. Verfahren nach Anspruch 25, weiterhin dadurch gekennzeichnet, daß der Schritt des Aufbringens mittels Tauchen durchgeführt wird.

**Revendications**

1. Stratifié utilisable dans les vêtements, dans lequel un tissu fibreux non tissé (34) contenant une fibre discontinue (28) et un tissu tissé ou tricoté (26) sont assemblés l'un à l'autre par aiguilletage, caractérisé en ce que la fibre discontinue (28) dudit tissu non tissé (34) a un denier compris entre environ 1,5 et 15, la fibre discontinue du dit tissu non tissé (34) étant aiguilletée à travers le dit tissu tissé ou tricoté (26) avec une densité de pénétration comprise entre environ 62,0 et 108,5 pénétrations par cm² (400 et 700 pénétrations par pouce caré), la fibre discontinue (28) du dit tissue non tissé (34) se prolongeant depuis la surface exposée (30) du dit tissu tissé ou tricoté (26) pour former une base pour un revêtement texturé appliqué ultérieurement (42), la surface exposée (30) du dit tissu tissé ou tricoté (26) formant la surface extérieure du vêtement, et la surface exposée (50) du dit tissu non tissé (34) formant la surface intérieure du vêtement.

2. Stratifié selon la revendication 1, caractérisé en outre en ce que le dit tissu fibreux non tissé (34) est constitué par des matières choisies parmi la laine, le polyester, les polyoléfines, les polyamides, le polyacrylonitrile et leurs mélanges.

3. Stratifié selon la revendication 1, caractérisé en outre en ce que le dit tissu tissé ou tricoté (26) est constitué par des matières choisies parmi le coton, le polyester, le polyamide et leurs mélanges.

4. Stratifié selon la revendication 1, caractérisé en outre en ce que la dite fibre discontinue (28) du tissu non tissé (34) est du polyamide.

5. Stratifié selon la revendication 1, caractérisé en outre en ce que

a) le dit tissu fibreux non tissé (34) est du polyester, et

b) le dit tissu tissé ou tricoté (26) est un jersey de polyester tricoté.

6. Stratifié selon la revendication 1, caractérisé en outre en ce que le dit stratifié est assemblé par aiguilletage, la dite fibre discontinue (28) du tissu non tissé (34) ayant une profondeur de pénétration comprise entre environ 0,64 et 1,27 cm (0,25 et 0,50 pouces).

7. Doublure de grant de travail, caractérisée en ce que l'empaumure (14) de la dite doublure de gant de travail comprend un stratifié selon l'une quelconque des revendications 1—6 et en ce que le dos (12) de la dite doublure de gant de travail comprend un textile tissé ou tricoté.

8. Doublure de gant de travail selon la revendication 7, caractérisée en outre en ce qu'un revêtement élastomère (42) est appliqué sur la surface extérieure de la dite empaumure (14) de la dite doublure de gant de travail.

9. Doublure de gant de travail selon la revendication 8, caractérisé en outre en ce que le dit revêtement élastomère (42) est choisi parmi un plastisol de poly (chlorure de vinyle), un caoutchouc naturel et un caoutchouc synthétique.

10. Doublure de gant de travail, caractérisée en ce que l'empaumure (28) et le dos (22) comprennent un stratifié selon l'une quelconque des revendications 1—6.

11. Doublure de gant de travail selon la revendication 10, caractérisée en outre en ce qu'un revêtement élastomère (42) est appliqué sur la surface extérieure de l'empaumure (20 et du dos (22) de la dite doublure de gant de travail.

12. Doublure de gant de travail selon la revendication 11, caractérisée en outre en ce que le dit revêtement élastomère (42) est choisi parmi un plastisol de poly (chlorure de vinyle), un caoutchouc naturel et un caoutchouc synthétique.

13. Doublure de botte de travail, caractérisée en ce qu'au moins une partie de la dite doublure de botte de travail comprend un stratifié selon l'une quelconque des revendications 1—6, en ce que la dite partie de stratifié est recouverte d'un revêtement élastomère (42) et en ce que le dit revêtement élastomère (42) est choisi parmi un plastisol de poly (chlorure de vinyle), un caoutchouc naturel et un caoutchouc synthétique.

14. Doublure de tablier de travail, caractérisée en ce qu'au moins une partie de la dite doublure de tablier de travail comprend un stratifié selon l'une quelconque des revendications 1—6, en ce que la dite partie de stratifié est recouverte d'un revêtement élastomère (42) et en ce que le dit revêtement élastomére (42) est choisi parmi un plastisol de poly (chlorure de vinyle), un caoutchouc naturel et un caoutchouc synthétique.

15. Gant de travail, caractérisé en ce qu'au moins une partie du dit gant de travail comprend un stratifié selon l'une des revendications 1 à 6.

16. Gant selon la revendication 15, caractérisé en outre en ce que le dit revêtement élastomère (42) est choisi parmi les plastisols de poly (chlorure de vinyle), les caoutchoucs naturels et les caoutchouc synthétiques.

17. Gant selon la revendication 15, caractérisé en outre en ce que le ddit tissu fibreux non tissé (34) est constitué par des matériaux choisis parmi la laine, le polyester, les polyoléfines, les polyamides, le polyacrylonitrile et leurs mélanges.

18. Gant selon la revendication 15, caractérisé en outre en ce que le dit tissu tissé ou tricoté (26) est constitué par des matières choisies parmi le coton, le polyester, le polyamide et leurs mélanges.

19. Procédé de production d'un stratifié utile dans les vêtements, comprenant les étapes qui consistent à:

a) choisir dans une première étape de sélection un tissu fibreux non tissé (34) contenant une fibre discontinue (28),

b) choisir dans une seconde étape de sélection un tissu tissé ou tricoté (26),

c) aiguilleter le dit tissu fibreux non tissé (34) sur le dit tissu tissé ou tricoté (26) avec la dite fibre discontinue (28) provenant du dit tissu non tissé (34), caractérisé en cce que

d) la dite étape d'aiduilletage est réalisée de manière que la dite fibre synthétique discontinue (28) du tissu non tissé (34) se prolonge depuis la surface exposée (30) du dit tissu tissé ou tricoté (26), et en ce que

e) la dite étape d'aiguilletage est réalisée en aiguilletant avec une profondeur de pénétration comprise entre environ 0,64 et 1,27 cm (0,25 et 0,50 pouces).

20. Procédé selon la revendication 19, caractérisé en outre en ce que la dite première étape de sélection se fait parmi des matières choisies parmi la laine, le polyester, les polyoléfines, les polyamides, le polyacrylonitrile et leurs mélanges.

21. Procédé selon la revendication 20, caractérisé en outre en ce que la seconde étape de sélection se fait parmi des matières choisies parmi le coton, le polyester, les polyamides et leurs mélanges.

22. Procédé selon la revendication 21, caractérisé en outre en ce que la dite fibre discontinue (28) a un denier compris entre environ 1,5 et 15.

23. Procédé selon la revendication 22, caractérisé en outre en ce que la dite étape d'aiguilletage est réalisée avec un degré de pénétration compris entre environ 62,0 et 108,5 pénétrations par $cm^2$ (400 et 700 pénétrations par pouce carré).

24. Procédé de façonnage d'un vêtement, caractérisé par les étapes qui consistent à:

a) façonner un stratifié selon le procédé de l'une des revendications 19—23,

b) façonner un vêtement dans lequel au moins une de ses parties est constituée par le dit stratifié façonné dans la dite étape d'aiguilletage, et

c) appliquer un revêtement élastomère (42) sur au moins la dite surface exposée (30) du dit tissu tissé ou tricoté (26) formant la surface extérieure de la dite partie de stratifié du dit vêtement façonné dans la dite étape de façonnage, et

d) durcir le dit revêtement élastomère (42).

25. Procédé selon la revendication 24, caractérisé en outre en ce que le dit revêtement élastomère (42) dans la dite étape d'application est choisi parmi un plastisol de poly (chlorure de vinyle), un caoutchouc naturel et un caoutchouc synthétique.

26. Procédé selon la revendication 25, caractérisé en outre en ce que la dite étape d'application est réalisée par enduction à la lame.

27. Procédé selon la revendication 26, caractérisé en outre en ce que la dite étape d'application est réalisée par impression.

28. Procédé selon la revendication 27, caractérisé en outre en ce que la dite étape d'application est réalisée par trempage.

FIG.1

FIG.1a

FIG.2

FIG.4

FIG.3